# FASCICULE DE BREVET EUROPEEN

(11) **EP 2 796 040 B1**
(45) Date de publication et mention de la délivrance du brevet: **28.08.2019**
(21) Numéro de dépôt: 14165612.4
(22) Date de dépôt: 23.04.2014
(51) Int. Cl.: A01M 29/34, A01G 13/10, A01M 1/10

(54) **Dispositif de piégeage à moyens de jonction**
Insektenfalle mit Verbindungsmitteln
Trapping device with joining means

(30) Priorité: 24.04.2013 FR 1353727
(43) Date de publication de la demande: 29.10.2014
(73) Titulaire: Crea, 74130 Bonneville (FR)
(72) Inventeur: Bodo, Lionel, 74130 Ayze (FR)
(74) Mandataire: Cabinet Poncet

(56) Documents cités:
- DE-C1- 3 728 731
- DE-U1- 29 801 941
- FR-A1- 2 827 120
- FR-A1- 2 946 834
- GB-A- 745 579
- US-A- 2 261 454
- US-A- 2 999 479

## Description

La présente invention concerne un dispositif de piégeage d'animaux nuisibles se développant sur les arbres ou attaquant les arbres, tels que les chenilles et plus particulièrement les chenilles processionnaires du pin.

Pour lutter contre de tels animaux nuisibles lors de leur montée sur les arbres ou lors de leur descente des arbres, on connaît des pièges comportant un collier conformé pour entourer le tronc d'un arbre, ledit collier comprenant un trottoir sensiblement annulaire s'étendant sensiblement dans un premier plan destiné à être orienté horizontalement.

Un dispositif de piégeage de ce type est par exemple décrit dans le document FR 2 946 834 A1. Pour s'opposer de façon plus complète à un passage des animaux nuisibles dans l'interstice présent entre le collier et le tronc de l'arbre, ce document préconise le recours à des moyens de jonction consistant en un cordon de joint réalisé au mastic.

La réalisation d'un cordon de joint au mastic impose la fourniture et le maniement d'un matériau pâteux vite périssable. La réalisation de ce cordon de joint est peu aisée car il faut remplir de mastic tous les creux de l'écorce de l'arbre selon une couronne périphérique autour de laquelle doit être installé le piège. De plus, un joint réalisé par du mastic marque l'écorce de l'arbre et l'arrache partiellement lors du retrait du dispositif de piégeage.

Le document DE 37 28 731 C1 décrit une barrière de protection contre les escargots et limaces pour protéger les cultures.

Le document US 2,261,454 A décrit un dispositif de piégeage à plusieurs tronçons de collier connectés les uns aux autres de façon amovible par l'intermédiaire de vis rapportées ou de façon inamovible par l'intermédiaire de rivets. Il n'est pas prévu de moyens de jonction entre le dispositif de piégeage et le tronc de l'arbre.

Le document US 2,999,479 A décrit une collerette annulaire dont le bord intérieur est muni d'entailles radiales pour former des lamelles destinée à se plier plus ou moins lors de la pose de la collerette autour du tronc d'un arbre. L'écart entre les lamelles dépend ainsi du diamètre du tronc de l'arbre sur lequel est posée la collerette. L'effet de piégeage n'est donc pas garanti, car l'espace disponible entre deux lamelles peut suffire sur certains arbres pour laisser passer des animaux nuisibles entre le tronc de l'arbre et le dispositif de piégeage, tandis qu'il sera suffisamment petit pour bloquer les animaux nuisibles sur d'autres arbres.

Le document GB 745,579 A décrit une bande de matériau fibreux destiné à être enroulée autour d'un arbre. Dans ce matériau, les fibres n'ont aucune orientation particulière.

Un problème proposé par la présente invention est de concevoir un dispositif de piégeage efficace, facile et rapide à installer, et assurant une jonction satisfaisante entre le collier et l'arbre pour s'opposer à un passage des animaux nuisibles entre le collier et le tronc de l'arbre.

Simultanément, l'invention vise à concevoir un dispositif de piégeage qui s'adapte facilement à la forme le plus souvent non circulaire de la périphérie du tronc des arbres.

Pour atteindre ces objets ainsi que d'autres, l'invention propose un dispositif de piégeage selon la revendication 1.

Grâce à leur orientation, les poils souples viennent au contact de l'écorce de l'arbre par leurs extrémités libres et adaptent de façon fine et précise le dispositif de piégeage au contour convexe irrégulier de l'arbre, en pénétrant dans les irrégularités en creux de l'écorce et en se repliant lorsque l'écorce de l'arbre présente des bosses, et bloquent ainsi efficacement les animaux nuisibles. Des essais ont démontré la très grande efficacité de tels moyens de jonction lors du piégeage de chenilles processionnaires.

De tels moyens de jonction sont rapides et faciles à mettre en place mais également à retirer sans affecter l'arbre, contrairement à un joint réalisé au mastic.

De tels moyens de jonction permettent en outre d'adapter parfaitement le dispositif de piégeage au contour du tronc de l'arbre même si la section transversale de celui-ci n'est pas rigoureusement circulaire. Et l'espace entre les poils ne dépend pas du diamètre de l'arbre sur lequel est monté le dispositif de piégeage de sorte que cet espace peut être choisi et maintenu pour empêcher efficacement le passage d'animaux nuisibles déterminés.

Avantageusement, le dispositif peut comprendre des moyens de barrière sur le trottoir sensiblement annulaire, comportant de préférence une paroi périphérique latérale s'étendant depuis et à l'écart du trottoir sensiblement annulaire selon une première direction sensiblement perpendiculaire au premier plan. En alternative ou en complément, les moyens de barrière peuvent comporter un caniveau rempli d'une substance liquide ou solide destinée à tuer ou à repousser les animaux nuisibles, ou peuvent comporter une substance adhésive ou gluante disposée sur le trottoir pour retenir les animaux nuisibles.

De préférence, l'arrangement de poils souples est disposé de façon que les poils souples sont orientés en s'étendant parallèlement au premier plan depuis et à l'écart du trottoir sensiblement annulaire. En position d'utilisation sur un arbre, les poils souples sont ainsi dirigés en direction de l'arbre à entourer, ce qui assure que, lors de la mise en place du dispositif de piégeage autour de l'arbre, les poils pénètrent dans les creux de l'écorce.

Avantageusement, l'arrangement de poils souples peut être un joint à poils souples, de préférence tel que les joints brosses vendus sous la dénomination commerciale STRIBO FLEX par la société KOTI INDUSTRIEL EN TECHNISCH BORSTELWERK BV, rapporté et fixé sur le trottoir sensiblement annulaire.

De préférence, le dispositif de piégeage comprend des moyens de maintien en orientation fixe du joint à poils souples dans une orientation prédéterminée par rapport au trottoir sensiblement annulaire. De tels moyens de maintien forcent les poils souples à pénétrer dans les creux de l'écorce pour bloquer efficacement les animaux nuisibles.

De façon pratique, on peut disposer de moyens de maintien satisfaisants en prévoyant que :
- le joint à poils souples comporte un corps de base semi-rigide à section transversale non circulaire depuis lequel s'étendent les poils souples,
- le collier comporte des lumières de réception du joint à poils souples, à section transversale non circulaire de forme sensiblement complémentaire à la section transversale non circulaire du corps de base du joint à poils souples.

Avantageusement, le trottoir sensiblement annulaire peut être pourvu de trous dimensionnés de façon à évacuer les eaux de pluie sans pour autant autoriser le passage des animaux nuisibles à piéger. Cela évite, en cas de forte pluie, une montée de niveau d'eau dans le collier, qui permettrait aux animaux nuisibles de flotter et de s'échapper avec le trop-plein.

De préférence, on peut prévoir que :
- le collier est au moins en partie constitué par une pluralité de tronçons de collier reliés entre eux par des moyens de connexion,
- lesdits moyens de connexion sont conformés de façon à ce que chaque tronçon de collier est relié aux tronçons de collier adjacents de façon pivotante autour d'axes orientés selon une première direction sensiblement perpendiculaire au premier plan.

Du fait que les moyens de connexion autorisent un pivotement des tronçons de collier adjacents les uns par rapport aux autres, le collier peut suivre au plus près le contour du tronc de l'arbre et s'adapte au mieux à la surface périphérique généralement non circulaire du tronc de l'arbre. Cette adaptation ne nécessite pas d'avoir recours à de multiples pièces rapportées telles que des cales d'ajustement. En outre, cette adaptation évite d'avoir recours à des moyens de jonction à poils souples de longueur trop importante dont la rigidité et la densité ne suffiraient pas pour empêcher le passage d'animaux nuisibles.

Enfin, cet unique degré de liberté en pivotement entre les tronçons de collier successifs permet une manipulation aisée du dispositif de piégeage, les mouvements relatifs entre les tronçons de collier adjacents étant limités en pratique à un simple pivotement dans un plan.

De préférence, les moyens de connexion peuvent être conformés de façon à ce que chaque tronçon de collier est relié aux tronçons de collier adjacents de façon amovible. On peut ainsi ajouter ou retirer un ou plusieurs tronçons de collier pour en modifier la longueur en vue de l'adapter au mieux au périmètre du tronc de l'arbre.

En pratique, on peut prévoir que chaque tronçon de collier s'étend entre deux extrémités, et que :
- chaque tronçon de collier comporte à une de ses extrémités un axe de pivot orienté selon la première direction,
- chaque tronçon de collier comporte à l'autre de ses extrémités des moyens de réception de l'axe de pivot d'un tronçon de collier adjacent.

Avantageusement, les moyens de réception peuvent comporter, à distance l'un de l'autre selon la première direction :
- un premier logement cylindrique de réception orienté selon la première direction,
- un second logement cylindrique de réception orienté selon la première direction et muni d'une fente latérale d'introduction.

De préférence, on peut prévoir que :
- la fente latérale d'introduction présente une largeur inférieure au diamètre de l'axe de pivot d'un tronçon de collier adjacent,
- le second logement cylindrique de réception est fabriqué en un matériau présentant une élasticité suffisante pour autoriser le montage en force de l'axe de pivot d'un tronçon de collier adjacent dans le second logement cylindrique de réception, à travers la fente latérale d'introduction.

De tels moyens de connexion sont simples et rapides à mettre en oeuvre sur place et ne nécessitent aucun outillage tant pour l'assemblage des tronçons de collier que pour leur séparation.

Selon une première configuration, le collier peut comprendre des tronçons de collier tous identiques entre eux. N'ayant qu'un unique type de tronçons de collier, les tronçons de collier du dispositif de piégeage peuvent être fabriqués en grande série, par exemple par un procédé de moulage par injection à l'aide d'un unique moule, afin de procurer une fabrication peu onéreuse d'un dispositif de piégeage.

Selon une deuxième configuration, le collier peut comporter :
- des tronçons de collier dépourvus de moyens d'ouverture, qui sont tous identiques entre eux,
- au moins un tronçon de collier muni de moyens d'ouverture comportant un orifice dans le trottoir permettant un échappement dirigé des animaux nuisibles confinés dans le volume compris entre le tronc de l'arbre, le trottoir et la paroi périphérique latérale.

Il est ainsi possible d'utiliser le dispositif de piégeage pour canaliser et capturer les animaux nuisibles même lorsque la quantité d'animaux nuisibles est trop grande pour rester contenue sur le collier. Le dispositif de piégeage peut donc garder des dimensions raisonnables, indépendamment de la quantité d'animaux nuisibles à capturer.

Dans cette deuxième configuration, le dispositif de piégeage ne comporte que deux types de tronçons de collier, ce qui permet malgré tout de fabriquer les différents tronçons de collier du dispositif de piégeage en grande série, par exemple par un procédé de moulage par injection à l'aide de seulement deux moules, afin de procurer une fabrication peu onéreuse d'un dispositif de piégeage capable de canaliser et capturer les animaux nuisibles.

Avantageusement, le dispositif de piégeage peut comporter des moyens de tenue d'un tuyau dans l'orifice. Ce tuyau permet d'accompagner les animaux nuisibles de façon douce et progressive pour les amener dans un conteneur prévu pour leur capture. En effet, les animaux nuisibles tels que les chenilles ne franchissent pas les brusques différences de hauteur.

De préférence, le dispositif de piégeage peut comprendre des moyens de retenue amovibles d'un conteneur destiné à recevoir et contenir les animaux nuisibles s'échappant par l'orifice. Les moyens de retenue amovibles permettent de changer périodiquement le conteneur avant que celui-ci soit rempli d'animaux nuisibles et ne puisse plus en recevoir. On peut ainsi fixer un conteneur vide pour poursuivre le piégeage, et ce sans démonter le dispositif de piégeage du tronc de l'arbre. Cela est particulièrement utile étant donné qu'à ce moment le volume compris entre le tronc de l'arbre, le trottoir et la paroi périphérique latérale contient des animaux nuisibles qu'il convient d'éviter de libérer ou de perturber.

Avantageusement, les moyens de retenue amovibles peuvent comprendre un filetage intérieur pour retenir par vissage un conteneur de type bouteille à goulot muni d'un filetage extérieur. La liaison entre le conteneur et le dispositif de piégeage est à la fois simple et efficace car rigoureusement étanche pour ne laisser s'échapper aucun animal nuisible.

De préférence, le dispositif de piégeage peut comporter un ou plusieurs adaptateurs destinés à se visser dans le filetage intérieur des moyens de retenue amovibles, et comportant respectivement un filetage intérieur de dimensions différentes de celles du filetage intérieur des moyens de retenue amovibles. Les adaptateurs permettent un ajustement du filetage intérieur sur lequel se visse le conteneur. On peut ainsi utiliser des conteneurs en matière plastique peu onéreux et faciles à trouver, tels que les bouteilles d'eau minérale d'une capacité de cinq litres dont le goulot est en général fabriqué selon deux dimensions standards.

Avantageusement, on peut prévoir que les tronçons de collier comportent chacun :
- un tronçon de trottoir,
- au moins une languette s'étendant depuis et en prolongement du tronçon de trottoir, destinée à venir à recouvrement au moins partiel du tronçon de trottoir d'un tronçon de collier adjacent.

Le recouvrement entre la languette et le tronçon de trottoir du tronçon de collier adjacent permet d'assurer une continuité satisfaisante du trottoir sensiblement annulaire pour éviter la présence d'interstices à travers lesquels les animaux nuisibles pourraient s'échapper ou qui pourraient gêner la bonne circulation des animaux nuisibles sur le trottoir sensiblement annulaire pour rejoindre, le cas échéant, l'orifice dans le trottoir permettant un échappement dirigé des animaux nuisibles vers le conteneur de capture.

De préférence, les tronçons de collier comportent chacun un tronçon de trottoir à bord intérieur libre courbe concave. Les tronçons de collier ont ainsi un bord intérieur libre conformé pour épouser au mieux la forme extérieure convexe du tronc d'arbre.

D'autres objets, caractéristiques et avantages de la présente invention ressortiront de la description suivante de modes de réalisation particuliers, faite en relation avec les figures jointes, parmi lesquelles :
- la figure 1 est une vue en perspective d'un dispositif de piégeage selon un mode réalisation particulier de l'invention ;
- la figure 2 est une vue de dessus du dispositif de piégeage de la figure 1 ;
- la figure 3 est une vue de dessous du dispositif de piégeage de la figure 1 ;
- la figure 4 est une vue en perspective d'un premier type de tronçon de collier ;
- la figure 5 est une vue en coupe du tronçon de collier de la figure 4 ;
- les figures 6 à 8 sont des vues en perspective de l'assemblage de deux tronçons de collier du premier type illustré sur la figure 4 ;
- la figure 9 est une vue en coupe d'un deuxième type de tronçon de collier auquel est connecté un conteneur destiné à recevoir et contenir les animaux nuisibles ; et
- la figure 10 est une vue en perspective éclatée du tronçon de collier du deuxième type illustré sur la figure 9.

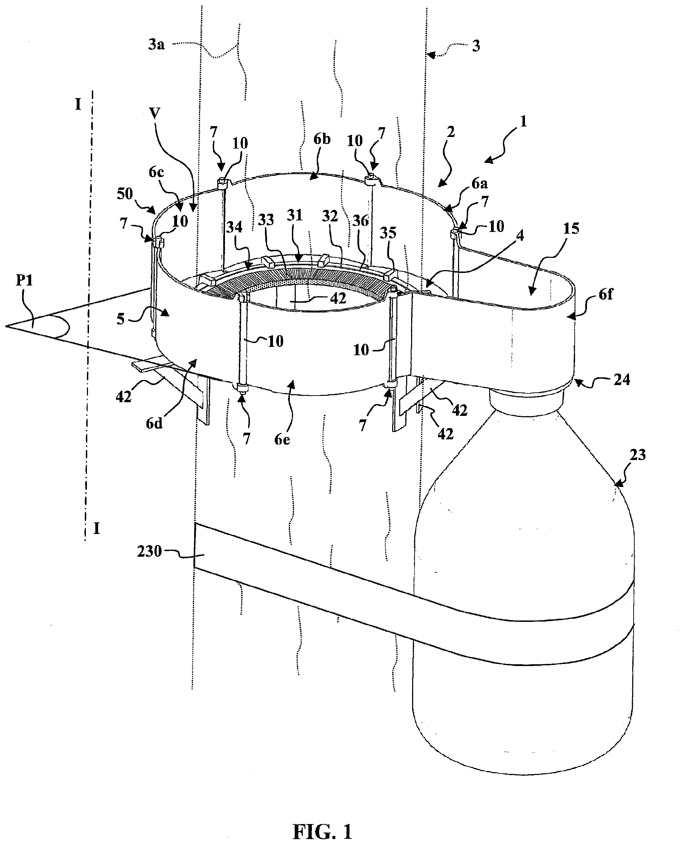

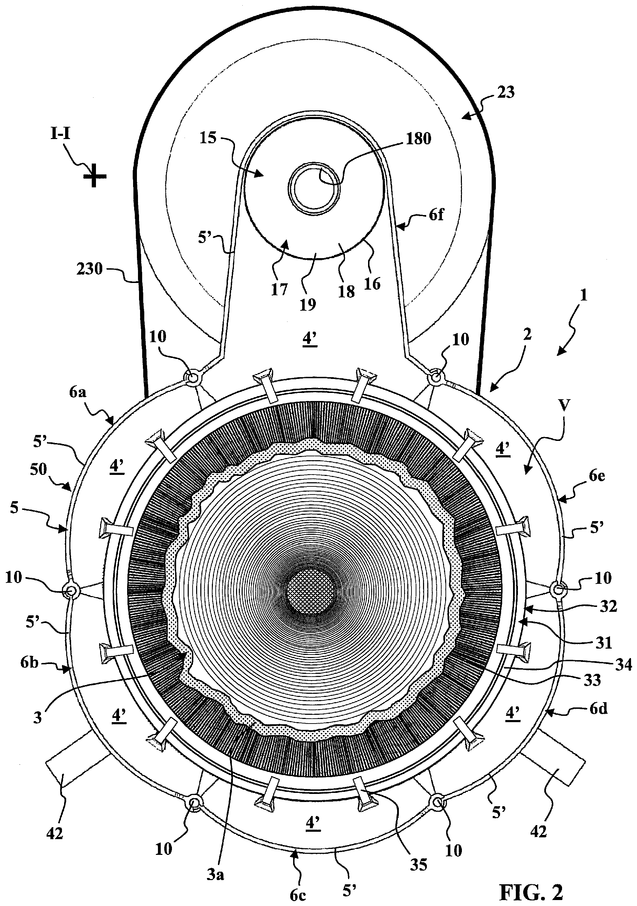

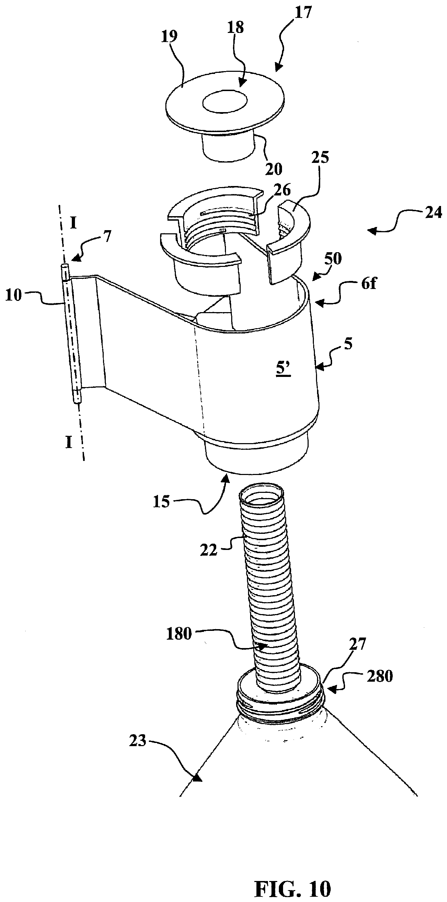

Les figures 1 à 10 illustrent un mode de réalisation particulier d'un dispositif 1 de piégeage d'animaux nuisibles tels que des chenilles.

Le dispositif 1 comporte un collier 2 conformé pour entourer le tronc d'un arbre 3, ledit collier 2 comprenant :
- un trottoir 4 sensiblement annulaire s'étendant sensiblement dans un premier plan P1 destiné à être orienté horizontalement,
- des moyens de barrière 50 comportant une paroi périphérique latérale 5 s'étendant depuis et à l'écart du trottoir 4 sensiblement annulaire selon une première direction I-I sensiblement perpendiculaire au premier plan P1.

Le trottoir 4 présente une largeur suffisante pour que, en position d'utilisation autour du tronc de l'arbre 3, la paroi périphérique latérale 5 soit écartée du tronc de l'arbre 3 selon une distance supérieure à la distance pouvant être franchie par les chenilles processionnaires. Une largeur de 2 centimètres peut convenir.

Le trottoir 4 sensiblement annulaire à paroi périphérique latérale 5 est constitué par une pluralité de tronçons de collier 6a à 6f reliés entre eux par des moyens de connexion 7. Les moyens de connexion 7 sont conformés de façon à ce que chaque tronçon de collier 6a à 6f est relié aux tronçons de collier adjacents 6a, 6b, 6c, 6d, 6e, ou 6f de façon pivotante selon la première direction 1-1. Cela permet aux tronçons de collier 6a à 6f, et donc au collier 2, de suivre au plus près le contour convexe du tronc de l'arbre 3 dont la section transversale n'est jamais rigoureusement circulaire.

Les moyens de connexion 7 sont en outre conformés de façon à ce que chaque tronçon de collier 6a à 6f est relié aux tronçons de collier adjacents 6a, 6b, 6c, 6d, 6e, ou 6f de façon amovible afin de pouvoir aisément modifier la longueur du collier 2 pour l'adapter au mieux au périmètre du tronc de l'arbre 3.

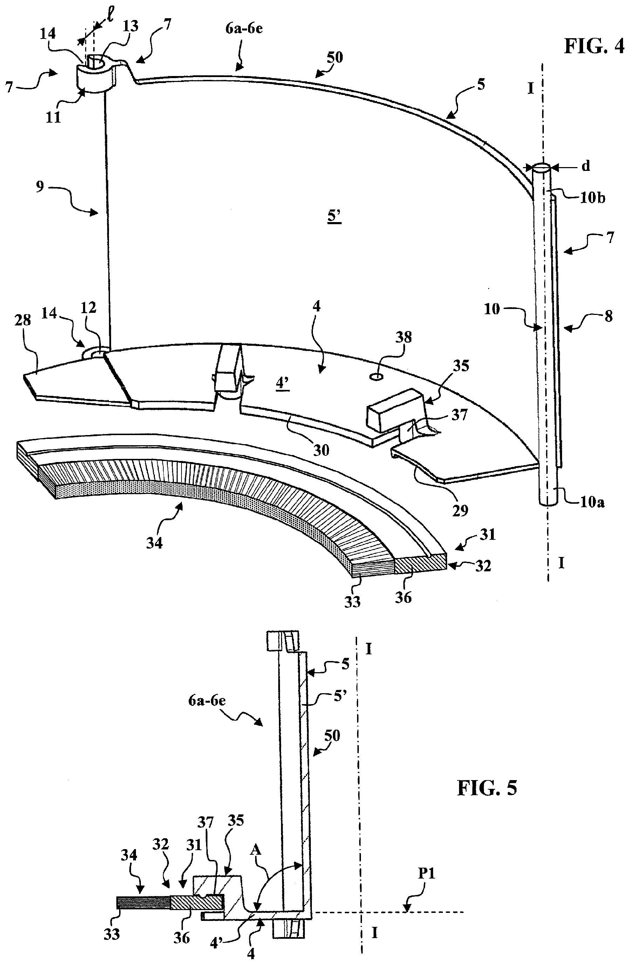

On voit plus particulièrement sur la figure 4 que chaque tronçon de collier 6a à 6e s'étend entre deux extrémités 8 et 9. A leur extrémité 8, les tronçons de collier 6a à 6e comportent un axe de pivot 10 orienté selon la première direction I-I. A leur autre extrémité 9, les tronçons de collier 6a à 6e comportent des moyens de réception 11 de l'axe de pivot 10 d'un tronçon de collier adjacent 6a, 6b, 6c, 6d, 6e, ou 6f. Il en est de même pour le tronçon de collier 6f.

Chaque tronçon de collier 6a à 6f est fabriqué en une seule pièce avec ses moyens de connexion 7 comprenant un axe de pivot 10 et des moyens de réception 11, ce qui permet une connexion fiable et rapide de chaque tronçon de collier 6a, 6b, 6c, 6d, 6e ou 6f avec des tronçons de collier adjacents 6a, 6b, 6c, 6d, 6e ou 6f sans avoir recours à des pièces rapportées ou à des outils.

Une fabrication en matière plastique des tronçons de collier 6a à 6f permet d'endurer les conditions météorologiques extérieures sans affecter le fonctionnement du piège, et permet une fabrication à coût raisonnable malgré la complexité de forme des tronçons de collier 6a à 6f.

De façon plus particulière, les moyens de réception 11 comportent, à distance l'un de l'autre selon la première direction I-I :
- un premier logement cylindrique de réception 12 orienté selon la première direction I-I,
- un second logement cylindrique de réception 13 orienté selon la première direction I-I et muni d'une fente latérale d'introduction 14.

La présence des premier 12 et second 13 logements cylindriques de réception permet une connexion manuelle, simple et rapide entre les tronçons de collier 6a à 6f, comme il sera expliqué ultérieurement.

Le premier logement cylindrique de réception 12 étant fermé selon sa périphérie, on limite efficacement les risques d'une déconnexion accidentelle entre deux tronçons adjacents 6a à 6f lorsqu'il se produit un effort tendant à déplacer deux tronçons adjacents 6a à 6f l'un à l'écart de l'autre.

La fente latérale d'introduction 14 présente une largeur f inférieure au diamètre d de l'axe de pivot 10 d'un tronçon de collier adjacent 6a, 6b, 6c, 6d, 6e, ou 6f. Le second logement cylindrique de réception 13 est fabriqué en un matériau présentant une élasticité suffisante pour autoriser le montage en force de l'axe de pivot 10 d'un tronçon de collier adjacent 6a, 6b, 6c, 6d, 6e, ou 6f dans le second logement cylindrique de réception 13, à travers la fente latérale d'introduction 14. La largeur f de la fente latérale d'introduction 14 peut ainsi momentanément augmenter sous l'effet de la force de montage pour laisser passer l'axe de pivot 10 pour sa réception dans le second logement cylindrique de réception 13, et peut ensuite reprendre sa largeur ℓ initiale inférieure au diamètre d de l'axe de pivot 10 pour retenir ce dernier dans le second logement cylindrique de réception 13.

Le collier 2 illustré sur les figures 1 à 3 comporte :
- des tronçons de collier 6a à 6e dépourvus de moyens d'ouverture 15, qui sont tous identiques entre eux,
- un tronçon de collier 6f muni de moyens d'ouverture 15 comportant un orifice 16 dans le trottoir 4.

Les moyens d'ouverture 15 permettent un échappement dirigé des animaux nuisibles confinés dans le volume V compris entre le tronc de l'arbre 3, le trottoir 4 et la paroi périphérique latérale 5 lorsqu'ils sont en nombre trop important pour rester sur le collier 2.

Dans une autre configuration, le collier 2 peut ne comporter que des tronçons de collier tous identiques entre eux. Pour ce faire, il suffit de remplacer le tronçon de collier 6f à moyens d'ouverture 15 par un tronçon de collier identique aux tronçons de collier 6a à 6e. Une telle configuration de collier 2 peut être utilisée lorsqu'il n'est pas besoin de canaliser et capturer les animaux nuisibles, par exemple lorsqu'une substance répulsive, capable de tuer les animaux nuisibles, adhésive ou gluante est disposée sur le trottoir 4.

En pratique, les tronçons de collier 6a à 6f sont rigides. Ceux-ci sont par exemple fabriqués par injection de matière plastique.

Dans le mode de réalisation illustré sur les figures, le tronçon de collier 6f à moyens d'ouverture 15 permet un échappement dirigé des animaux nuisibles confinés vers un conteneur 23 duquel les animaux nuisibles ne pourront pas ressortir et qui, une fois plein, pourra soit être détruit avec les animaux nuisibles qu'il contient, soit être vidé de ceux-ci puis réutilisé.

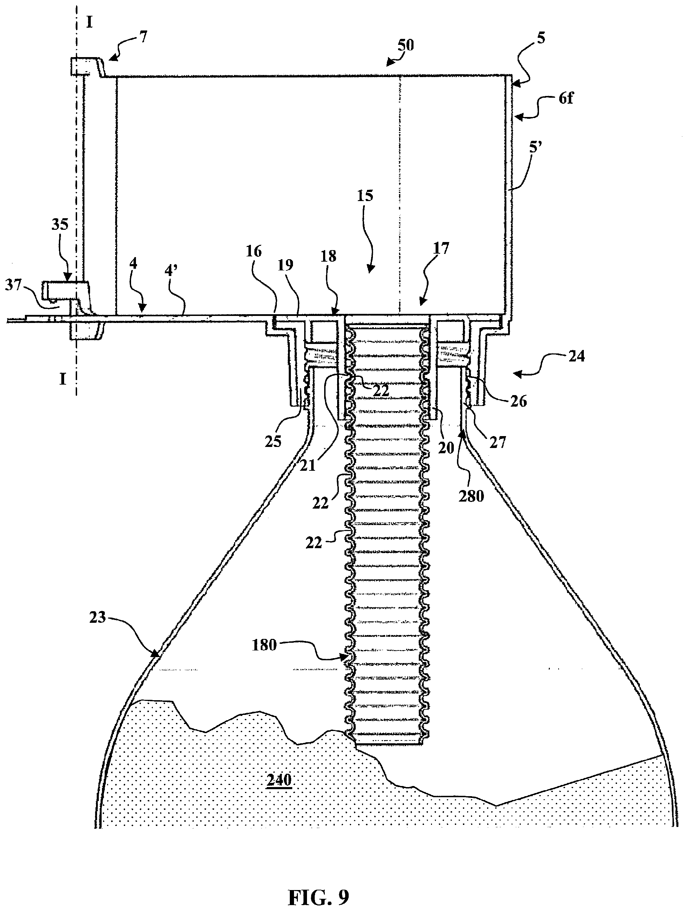

Afin de permettre une descente progressive et non rédhibitoire pour les animaux nuisibles vers l'intérieur du conteneur 23, le dispositif 1 comporte des moyens de tenue 17 d'un tuyau 180 dans l'orifice 16 comme il est plus particulièrement illustré sur la figure 9. En l'espèce, les moyens de tenue 17 comportent une bague 18 à épanouissement radial supérieur 19 venant s'emboiter selon sa périphérie dans l'orifice 16. La bague 18 présente un tronçon tubulaire 20 muni sur sa surface latérale intérieure d'une excroissance se présentant sous la forme d'une nervure annulaire 21. La nervure annulaire 21 est conformée et dimensionnée de façon à pénétrer dans au moins une gorge annulaire 22 que présente la surface latérale extérieure du tuyau 180. Cette coopération de la nervure annulaire 21 avec ladite au moins une gorge annulaire 22 permet une retenue axiale du tuyau 180 selon la première direction I-I par rapport au tronçon de collier 6f.

Sur la figure 9, on voit que le tuyau 180 accompagne la descente des animaux nuisibles depuis le trottoir 4 vers l'intérieur du conteneur 23 jusqu'à amener les animaux nuisibles, en sortie de tuyau 180, sur un matériau 240 tel qu'un mélange de terre et d'épines de pin dans lequel les chenilles processionnaires vont s'enfouir pour se transformer en chrysalides.

Le conteneur 23 destiné à recevoir et contenir les animaux nuisibles s'échappant du collier 2 par l'orifice 16 est fixé au tronçon de collier 6f par des moyens de retenue 24 amovibles. Les moyens de retenue 24 amovibles comportent une bague 25 s'encastrant selon sa périphérie dans l'orifice 16, et munie d'un filetage intérieur 26 apte à coopérer par vissage avec le filetage extérieur 27 du goulot 280 du conteneur 23 qui est une bouteille en matière plastique de grande capacité disponible dans le commerce (par exemple une bouteille d'un volume intérieur de cinq litres environ).

Il est possible de visser un conteneur 23 à goulot 280 d'une dimension différente en prévoyant une pluralité de bagues 25 dont l'épaisseur est adaptée de façon que le filetage intérieur 26 corresponde aux différents filetages standards existants sur le marché. En alternative ou en complément, on peut prévoir un ou plusieurs adaptateurs destinés à se visser dans le filetage intérieur 26 de la bague 25, et comportant respectivement un filetage intérieur de dimensions différentes de celles du filetage intérieur 26 de la bague 25.

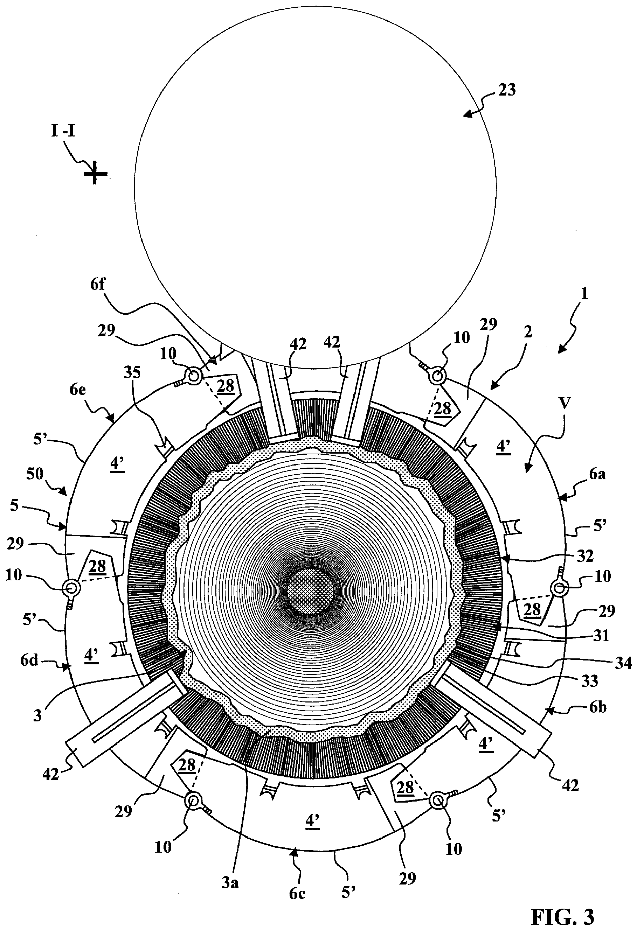

Sur les figures 3 et 4, on voit que les tronçons de collier 6a à 6f comportent chacun :
- un tronçon de trottoir 4' (ainsi qu'un tronçon de paroi périphérique latérale 5'),
- au moins une languette 28 s'étendant depuis et en prolongement du tronçon de trottoir 4', destinée à venir à recouvrement au moins partiel du tronçon de trottoir 4' d'un tronçon de collier adjacent 6a, 6b, 6c, 6d, 6e, ou 6f.

Ce recouvrement est plus particulièrement visible sur la figure 3 sur laquelle on constate en outre la présence de logements 29 en creux destinés à recevoir la languette 28 dans la zone de recouvrement.

Sur les figures 3 et 4, on constate que les tronçons de collier 6à à 6f comportent chacun un tronçon de trottoir 4' à bord intérieur libre 30 courbe concave permettant d'épouser au mieux la forme extérieure convexe du tronc de l'arbre 3.

Sur la figure 5, qui est une vue en coupe de l'un des tronçons de collier 6a à 6e, on constate que les tronçons de collier 6a à 6e présentent une section transversale sensiblement en forme de L par leur trottoir 4 et leur paroi périphérique latérale 5. Il est à noter que l'angle A entre le trottoir 4 et la paroi périphérique latérale 5 (qui est ici de 90°) peut être augmenté au-delà de 90° en fonction des utilisations prévues et des animaux nuisibles à piéger, afin d'adapter aux animaux à piéger la distance entre le tronc d'arbre et la paroi périphérique latérale 5. On peut par exemple prévoir un angle A supérieur à 90°.

Sur les figures 1 à 5, on distingue des moyens de jonction 31 souples destinés à joindre le collier 2 avec le tronc de l'arbre 3 qui présente, sur sa circonférence, de nombreuses irrégularités dues à la présence de creux et de bosses dans l'écorce 3a de l'arbre 3. Ces moyens de jonction 31 souples comprennent un arrangement 32 de poils 33 souples de densité adaptée pour empêcher le passage des animaux nuisibles. Pour plus de commodité de manipulation et d'installation, l'arrangement 32 de poils 33 souples est un joint à poils souples 34, de préférence tel que les joints brosses vendus sous la dénomination commerciale STRIBO FLEX par la société KOTI INDUSTRIEL EN TECHNISCH BORSTELWERK BV. Le joint à poils souples 34 est rapporté et fixé sur le trottoir 4 sensiblement annulaire.

Dans le mode de réalisation illustré sur les figures 1 à 5, le joint à poils souples 34 est rapporté et fixé sur le trottoir 4 de façon amovible. Le dispositif 1 comprend des moyens de maintien 35 en orientation fixe du joint à poils souples 34 dans une orientation prédéterminée par rapport au trottoir 4 sensiblement annulaire. En l'espèce, le joint à poils souples 34 comporte un corps de base 36 semi-rigide à section transversale non circulaire, et depuis lequel s'étendent les poils 33 souples parallèlement au premier plan P1. Le collier 2 comporte des lumières de réception 37 du joint à poils souples 34, à section transversale non circulaire et de forme sensiblement complémentaire à la section transversale non circulaire du corps de base 36, comme il est plus particulièrement visible sur la figure 5. La section transversale non circulaire des lumières de réception 37 est conformée pour recevoir et retenir (par encliquetage ou engagement en force par exemple) le corps de base 36 du joint à poils souples 34.

Sur la figure 4, on voit que le tronçon de trottoir 4' est pourvu d'un trou 38 dimensionné de façon à évacuer les eaux de pluie sans pour autant autoriser le passage des animaux nuisibles à piéger. La dimension des trous 38 est choisie inférieure à la taille des animaux nuisibles à piéger.

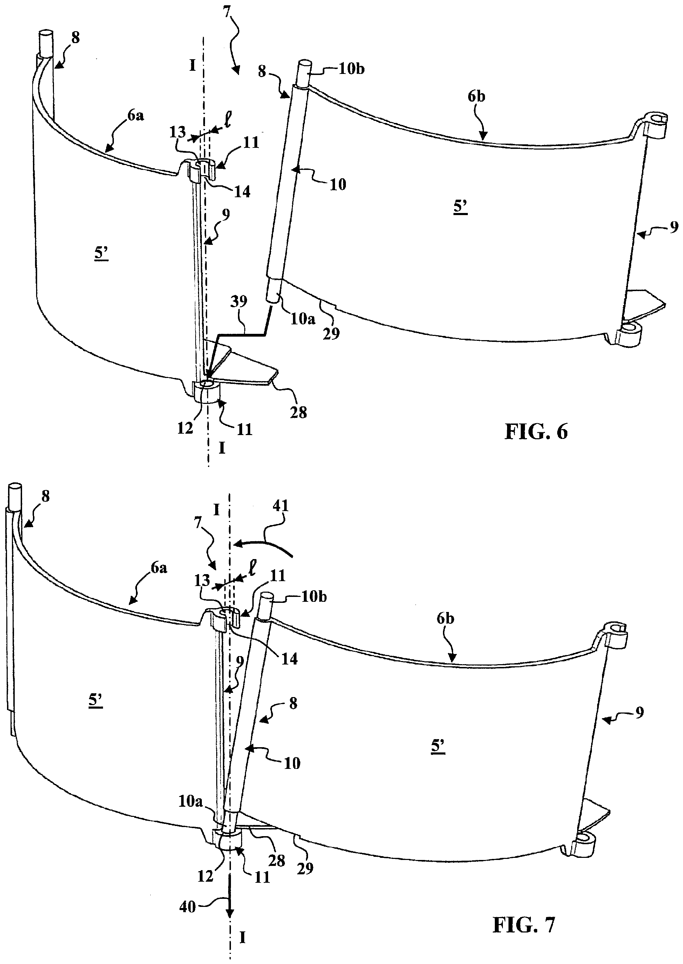

Les figures 6 à 8 sont des vues en perspective illustrant l'assemblage de deux tronçons de collier 6a et 6b.

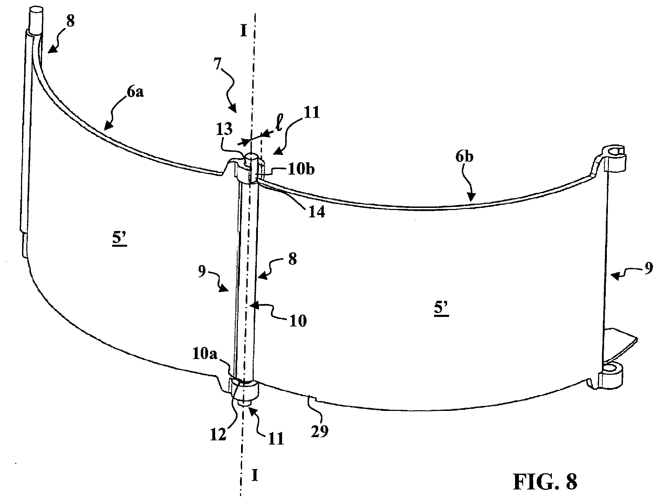

Le tronçon de collier 6a est tenu immobile tandis que le tronçon de collier 6b est approché de façon oblique pour engager l'extrémité inférieure 10a de l'axe de pivot 10 du tronçon de collier 6b dans le premier logement cylindrique de réception 12 porté à l'extrémité 9 du tronçon de collier 6a. Pour ce faire, on effectue un mouvement illustré par la flèche 39. Les tronçons de collier 6a et 6b se trouvent alors dans la disposition illustrée sur la figure 7 dans laquelle l'extrémité inférieure 10a de l'axe de pivot 10 commence à pénétrer dans le premier logement cylindrique de réception 12. On poursuit ensuite la pénétration de l'extrémité inférieure 10a dans le premier logement cylindrique de réception 12 selon un mouvement sensiblement illustré par la flèche 40. Simultanément, on effectue un mouvement de basculement du tronçon de collier 6b par rapport au tronçon de collier 6a, comme illustré par la flèche 41, pour amener l'extrémité supérieure 10b de l'axe de pivot 10 dans la fente latérale d'introduction 14. Une légère force latérale de montage est appliquée sur l'extrémité supérieure 10b pour forcer la pénétration de celle-ci dans le second logement cylindrique de réception 13 en provoquant un agrandissement de la largeur ℓ de la fente latérale d'introduction 14 qui reprend ensuite sa largeur ℓ initiale par élasticité. On se trouve alors dans la configuration relative illustrée sur la figure 8 dans laquelle les tronçons de collier 6a et 6b sont connectés l'un à l'autre et peuvent pivoter l'un par rapport à l'autre par rotation autour de la première direction I-I. Les tronçons de trottoir 4' se trouvent dans un seul et même plan.

La séparation des tronçons de collier 6a et 6b s'effectue en réalisant une manipulation inverse à celle décrite précédemment à l'aide de la succession des figures 6 à 8.

L'engagement de l'extrémité inférieure 10a de l'axe de pivot 10 dans le premier logement de réception 12 s'oppose efficacement à tout effort de traction visant à déplacer un tronçon de collier 6a, 6b, 6c, 6d, 6e ou 6f à l'écart d'un tronçon de collier 6a, 6b, 6c, 6d, 6e ou 6f adjacent dans le plan P1. On limite ainsi efficacement les risques de déconnexion accidentelle entre tronçons de collier adjacents 6a à 6f.

On comprend que le collier 2 du dispositif 1 selon l'invention peut être allongé ou raccourci à volonté par ajout ou retrait d'un tronçon de collier, en vue de présenter une longueur totale compatible avec le périmètre de l'arbre 3 sur lequel le dispositif 1 est destiné à être mis en place. Les moyens de jonction 31 permettent, par leur déformation, d'adapter le dispositif 1 de façon parfaite au contour irrégulier du tronc de l'arbre 3 avec une certaine tolérance. En particulier, plus les poils 33 souples sont longs, plus la tolérance d'ajustement du dispositif 1 au contour de l'arbre 3 sera élevée. Il faut toutefois se garder d'avoir recours à des poils 33 souples de longueur trop importante si leur rigidité et leur densité ne suffisaient pas pour empêcher le passage d'animaux nuisibles.

En pratique, de bons résultats ont été obtenus avec l'utilisation de poils 33 présentant une longueur comprise entre environ 20 millimètres et environ 60 millimètres.

L'utilisation d'un dispositif 1 selon l'invention va désormais être décrite dans le cadre du piégeage de chenilles processionnaires du pin.

Lorsqu'un arbre 3 est envahi dans son branchage par des chenilles processionnaires, ces chenilles effectuent à un moment déterminé une procession de nymphose en descendant les unes derrières les autres le long du tronc de l'arbre 3 pour atteindre le sol afin de s'y enterrer et se transformer en chrysalides.

Avant cette procession de nymphose, on place le dispositif 1 sur le tronc de l'arbre 3 comme illustré sur la figure 1. Pour ce faire, on commence par assembler un nombre suffisant de tronçons de collier 6a à 6f pour que le dispositif 1 présente une longueur totale suffisante pour entourer le tronc de l'arbre 3. Dans le mode de réalisation illustré sur les figures 1 à 3, le dispositif 1 comporte ainsi six tronçons de collier 6a à 6f reliés les uns aux autres par les moyens de connexion 7. L'assemblage de ces tronçons de collier 6a à 6f s'effectue comme expliqué précédemment en lien avec les figures 6 à 8. Une fois que les tronçons 6a à 6f sont reliés les uns aux autres, on dispose d'un collier 2 articulé capable de se plier et se déplier dans un plan P1 destiné à être orienté horizontalement. Les moyens de jonction 31 sont rapportés et fixés au trottoir 4 sensiblement annulaire formé par la mise bout à bout de tronçons de trottoir 4'. Les tronçons de paroi périphérique latérale 5' forment quant à eux des moyens de barrière 50 à paroi périphérique latérale 5 continue.

Avant la mise en place du dispositif 1 autour du tronc de l'arbre 3, deux tronçons de collier, par exemple les tronçons de colliers 6a et 6f, sont laissés détachés. L'utilisateur entoure alors le tronc de l'arbre 3 avec le collier 2 qui se déploie dans le plan P1 horizontal et vient relier les tronçons de collier 6a et 6f par leurs moyens de connexion 7 de façon à former un collier 2 annulaire continu autour du tronc de l'arbre 3.

Lors de cette mise en place, les moyens de connexion 7, grâce à la liaison pivotante qu'ils procurent entre chacun des tronçons de collier adjacents 6a à 6f, autorisent le collier 2 à prendre une forme qui suit les irrégularités de la périphérie du tronc de l'arbre 3, qui n'est jamais rigoureusement circulaire.

Toujours pendant cette mise en place, les poils 33 des moyens de jonction 31 souples viennent assurer une jonction parfaite entre le dispositif 1 et le tronc de l'arbre 3. L'arrangement 32 de poils 33 souples est disposé selon une orientation fixe grâce aux moyens de maintien 35, avec les poils 33 orientés en s'étendant depuis et à l'écart du trottoir 4 sensiblement annulaire. Les poils 33 sont ainsi dirigés vers l'arbre 3 pour venir, par leurs extrémités libres, au contact de l'écorce 3a de l'arbre 3 en pénétrant dans les irrégularités en creux de l'écorce 3a de l'arbre 3 et en se repliant lorsque l'écorce 3a de l'arbre 3 présente des bosses.

Pour assurer un maintien horizontal du premier plan P1, on peut en outre prévoir des équerres de fixation 42 destinées à venir simultanément en appui contre l'arbre 3 et sous le trottoir 4 sensiblement annulaire.

Pour compléter l'installation, on insère la bague 25 à filetage intérieur 26 dans l'orifice 16 prévu dans le tronçon de collier 6f, puis on insère la bague 18 à laquelle est fixé le tuyau 180 dans l'orifice 16.

Enfin, on met en place par vissage le conteneur 23 en engageant le goulot 280 à filetage extérieur 27 dans le filetage intérieur 26 de la bague 25 après avoir en partie rempli le conteneur 23 d'un matériau 240 à base de terre et d'épines de pin.

On se trouve alors dans la configuration illustrée sur la figure 1. En alternative ou en complément aux équerres 42, on peut enserrer le conteneur 23 et l'arbre 3 par un lien tel qu'une sangle 230, ce qui aura pour effet de maintenir fixe le dispositif 1 sur l'arbre 3.

En alternative ou en complément aux équerres 42 et à la sangle 230, le dispositif 1 peut être disposé sur l'arbre 3 à une hauteur telle que le conteneur 23 repose sur le sol et que cet appui contribue à stabiliser le dispositif 1 sur le tronc de l'arbre 3.

Lorsque les chenilles processionnaires entament leur procession de nymphose pour descendre de l'arbre 3, elles atteignent le dispositif 1 disposé sur le tronc de l'arbre 3. Les poils 33 souples des moyens de jonction 31 souples empêchent les chenilles de passer entre le dispositif 1 et le tronc de l'arbre 3. Les chenilles sont amenées à se répartir et à circuler sur le trottoir 4 sensiblement annulaire d'où elles s'échappent par l'orifice 16 des moyens d'ouverture 15 prévus dans le tronçon de collier 6f. Lors de leur descente, elles empruntent le tuyau 180 qui leur permet de descendre de façon douce et progressive jusqu'au matériau 240 présent dans le conteneur 23, et dans lequel elles vont s'enterrer pour effectuer leur transformation en chrysalides.

Lorsque le conteneur 23 est totalement rempli de chenilles, l'utilisateur dévisse le conteneur 23 du filetage intérieur 26 de la bague 25 pour le remplacer par un autre conteneur 23. Le conteneur 23 rempli de chenilles est alors fermé de façon étanche à l'aide d'un bouchon se vissant sur le goulot 280 fileté, et est ensuite évacué pour procéder à la destruction des animaux nuisibles. Le conteneur 23 étant du type bouteille d'eau minérale de grande capacité, présente une grande solidité et est difficilement perçable, de sorte qu'il peut être manipulé sans crainte malgré la quantité importante de chenilles hautement nuisibles qu'il contient.

Le retrait du conteneur 23 par dévissage s'effectue sans avoir à retirer le dispositif 1 du tronc de l'arbre 3, dispositif 1 qui est alors le plus souvent bondé de chenilles dans le volume V compris entre le tronc de l'arbre 3, le trottoir 4, et la paroi périphérique latérale 5.

Le dispositif 1 de piégeage décrit sur les figures n'est qu'un exemple particulier de mode de réalisation, et il convient de noter que celui-ci peut être modifié dans ses formes pour convenir à diverses utilisations sans pour autant sortir du domaine de protection de la présente invention. La présence d'un conteneur 23 pour recueillir les animaux nuisibles et/ou d'une paroi périphérique latérale 5 est parfaitement optionnelle. En alternative, le trottoir 4 sensiblement annulaire peut par exemple comporter une fosse destinée à être remplie d'une substance liquide ou solide destinée à tuer ou à repousser les animaux nuisibles. On pourra également munir le trottoir 4 sensiblement annulaire d'une substance adhésive ou gluante destinée à retenir les animaux nuisibles.

Par ailleurs, le dispositif 1 de piégeage décrit précédemment peut indifféremment être utilisé dans l'orientation illustrée sur les figures ou dans une orientation opposée pour bloquer et/ou tuer et/ou capturer des animaux nuisibles lors de leur montée sur l'arbre 3 ou lors de leur descente de l'arbre 3.

La présente invention n'est pas limitée aux modes de réalisation qui ont été explicitement décrits, mais elle en inclut les diverses variantes et généralisations contenues dans le domaine des revendications ci-après.

## Revendications

1. Dispositif (1) de piégeage d'animaux nuisibles tels que les chenilles, comportant un collier (2) conformé pour entourer le tronc d'un arbre (3), ledit collier (2) comprenant un trottoir (4) sensiblement annulaire s'étendant sensiblement dans un premier plan (P1) destiné à être orienté horizontalement, et comprenant des moyens de jonction (31) destinés à joindre le collier (2) avec le tronc de l'arbre (3), lesdits moyens de jonction (31) comprenant un arrangement (32) de poils (33) souples de densité adaptée pour empêcher le passage des animaux nuisibles, **caractérisé en ce que** les poils (33) sont orientés en s'étendant depuis et à l'écart du trottoir (4) de façon à être dirigés vers l'arbre (3) à entourer et à venir au contact de l'écorce (3a) de l'arbre (3) par leurs extrémités libres.

2. Dispositif (1) selon la revendication 1, **caractérisé en ce qu'**il comprend des moyens de barrière (50) sur le trottoir (4) sensiblement annulaire, comportant de préférence une paroi périphérique latérale (5) s'étendant depuis et à l'écart du trottoir (4) sensiblement annulaire selon une première direction (I-I) sensiblement perpendiculaire au premier plan (P1).

3. Dispositif (1) selon l'une des revendications 1 ou 2, **caractérisé en ce que** l'arrangement (32) de poils (33) souples est disposé de façon que les poils (33) souples sont orientés en s'étendant parallèlement au premier plan (P1) depuis et à l'écart du trottoir (4) sensiblement annulaire.

4. Dispositif (1) selon l'une quelconque des revendications 1 à 3, **caractérisé en ce que** l'arrangement (32) de poils (33) souples est un joint à poils souples (34) rapporté et fixé sur le trottoir (4) sensiblement annulaire.

5. Dispositif (1) selon la revendication 4, **caractérisé en ce qu'**il comprend des moyens de maintien (35) en orientation fixe du joint à poils souples (34) dans une orientation prédéterminée par rapport au trottoir (4) sensiblement annulaire.

6. Dispositif selon la revendication 5, **caractérisé en ce que** :
- le joint à poils souples (34) comporte un corps de base (36) semi-rigide à section transversale non circulaire depuis lequel s'étendent les poils (33) souples,
- le collier (2) comporte des lumières de réception (37) du joint à poils souples (34), à section transversale non circulaire de forme sensiblement complémentaire à la section transversale non circulaire du corps de base (36) du joint à poils souples (34).

7. Dispositif (1) selon l'une quelconque des revendications 1 à 6, **caractérisé en ce que** le trottoir (4) sensiblement annulaire est pourvu de trous (38) dimensionnés de façon à évacuer les eaux de pluie sans pour autant autoriser le passage des animaux nuisibles à piéger.

8. Dispositif (1) selon l'une quelconque des revendications 1 à 7, **caractérisé en ce que** :
- le collier (2) est au moins en partie constitué par une pluralité de tronçons de collier (6a - 6f) reliés entre eux par des moyens de connexion (7),
- lesdits moyens de connexion (7) sont conformés de façon à ce que chaque tronçon de collier (6a - 6f) est relié aux tronçons de collier adjacents (6a - 6f) de façon pivotante autour d'axes orientés selon une première direction (I-I) sensiblement perpendiculaire au premier plan (P1).

9. Dispositif (1) selon la revendication 8, **caractérisé en ce que** les moyens de connexion (7) sont conformés de façon à ce que chaque tronçon de collier (6a - 6f) est relié aux tronçons de collier adjacents (6a - 6f) de façon amovible.

10. Dispositif (1) selon l'une des revendications 8 ou 9, **caractérisé en ce que** chaque tronçon de collier (6a - 6f) s'étend entre deux extrémités (8, 9), et **en ce que** :
- chaque tronçon de collier (6a - 6f) comporte à une de ses extrémités (8, 9) un axe de pivot (10) orienté selon la première direction (I-I),
- chaque tronçon de collier (6a - 6f) comporte à l'autre de ses extrémités (8, 9) des moyens de réception (11) de l'axe de pivot (10) d'un tronçon de collier adjacent (6a - 6f).

11. Dispositif (1) selon la revendication 10, **caractérisé en ce que** les moyens de réception (11) comportent, à distance l'un de l'autre selon la première direction (I-I) :
- un premier logement cylindrique de réception (12) orienté selon la première direction (I-I),
- un second logement cylindrique de réception (13) orienté selon la première direction (I-I) et muni d'une fente latérale d'introduction (14).

12. Dispositif (1) selon la revendication 11, **caractérisé en ce que** :
- la fente latérale d'introduction (14) présente une largeur (ℓ) inférieure au diamètre (d) de l'axe de pivot (10) d'un tronçon de collier adjacent (6a - 6f),
- le second logement cylindrique de réception (13) est fabriqué en un matériau présentant une élasticité suffisante pour autoriser le montage en force de l'axe de pivot (10) d'un tronçon de collier adjacent (6a - 6f) dans le second logement cylindrique de réception (13), à travers la fente latérale d'introduction (14).

13. Dispositif (1) selon l'une quelconque des revendications 8 à 12, **caractérisé en ce que** le collier (2) comprend des tronçons de collier (6a - 6f) tous identiques entre eux.

14. Dispositif (1) selon l'une quelconque des revendications 8 à 12, **caractérisé en ce que** le collier (2) comporte :
- des tronçons de collier (6a - 6e) dépourvus de moyens d'ouverture (15), qui sont tous identiques entre eux,
- au moins un tronçon de collier (6f) muni de moyens d'ouverture (15) comportant un orifice (16) dans le trottoir (4) permettant un échappement dirigé des animaux nuisibles.

15. Dispositif (1) selon la revendication 14, **caractérisé en ce qu'**il comporte des moyens de tenue (17) d'un tuyau (180) dans l'orifice (16).

16. Dispositif (1) selon l'une des revendications 14 ou 15, **caractérisé en ce qu'**il comprend des moyens de retenue (24) amovibles d'un conteneur (23) destiné à recevoir et contenir les animaux nuisibles s'échappant par l'orifice (16).

17. Dispositif (1) selon la revendication 16, **caractérisé en ce que** les moyens de retenue (24) amovibles comprennent un filetage intérieur (26) pour retenir par vissage un conteneur (23) de type bouteille à goulot (280) muni d'un filetage extérieur (27).

18. Dispositif (1) selon la revendication 17, **caractérisé en ce qu'**il comporte un ou plusieurs adaptateurs destinés à se visser dans le filetage intérieur (26) des moyens de retenue (24) amovibles, et comportant respectivement un filetage intérieur de dimensions différentes de celles du filetage intérieur (26) des moyens de retenue (24) amovibles.

19. Dispositif (1) selon l'une quelconque des revendications 8 à 18, **caractérisé en ce que** les tronçons de collier (6a - 6f) comportent chacun :
- un tronçon de trottoir (4'),
- au moins une languette (28) s'étendant depuis et en prolongement du tronçon de trottoir (4'), destinée à venir à recouvrement au moins partiel du tronçon de trottoir (4') d'un tronçon de collier adjacent (6a - 6f).

20. Dispositif (1) selon l'une quelconque des revendications 8 à 19, **caractérisé en ce que** les tronçons de collier (6a - 6f) comportent chacun un tronçon de trottoir (4') à bord intérieur libre (30) courbe concave.

21. Utilisation d'un arrangement (32) de poils (33) souples pour faire la jonction entre un tronc d'arbre (3) et un dispositif (1) de piégeage d'animaux nuisibles tels que les chenilles, ledit dispositif (1) de piégeage comportant un collier (2) destiné à entourer le tronc d'un arbre (3), **caractérisée en ce que**, lors de ladite utilisation, les poils (33) sont orientés en s'étendant depuis et à l'écart du collier (2) de façon à être dirigés vers l'arbre (3) à entourer et à venir au contact de l'écorce (3a) de l'arbre (3) par leurs extrémités libres.

## Patentansprüche

1. Vorrichtung (1) zum Fangen von Schädlingen, wie Raupen mit einer Manschette (2), die ausgebildet ist, den Stamm eines Baumes (3) zu umgreifen, wobei die Manschette (2) einen im Wesentlichen ringförmigen Gang (4) umfasst, der sich im Wesentlichen in einer horizontal auszurichtenden ersten Ebene (P1) erstreckt, und umfassend Verbindungsmittel (31) zum Verbinden der Manschette (2) mit dem Stamm des Baumes (3), wobei die Verbindungsmittel (31) eine Anordnung (32) flexibler Borsten (33) mit einer Dichte umfassen, die geeignet ist Schädlinge am Durchtreten zu hindern, **dadurch gekennzeichnet, dass** die Borsten (33) in einer sich im Wesentlichen vom ringförmigen Gang (4) weggerichteten Weise derart erstrecken, dass sie zum Baum (3) gerichtet sind, um die Rinde (3a) des Baumes (3) mit ihren freien Enden zu berühren und sie einzuschließen.

2. Vorrichtung (1) nach Anspruch 1, **dadurch gekennzeichnet, dass** sie Barrieremittel (50) auf dem im Wesentlichen ringförmigen Gang (4) umfasst, die vorzugsweise eine äußere Seitenwand (5) umfassen, die sich weg vom im Wesentlichen ringförmigen Gang (4) einer im Wesentlichen zur ersten Ebene (P1) rechtwinkligen ersten Richtung (I-I) erstreckt.

3. Vorrichtung (1) nach Anspruch 1 oder 2, **dadurch gekennzeichnet, dass** die Anordnung (32) flexibler Borsten (33) derart arrangiert ist, die flexiblen Borsten (33) in einer sich parallel zur ersten Ebene (P1) weg vom im Wesentlichen ringförmigen Gang (4) erstreckenden Weise ausgerichtet sind.

4. Vorrichtung (1) nach einem der Ansprüche 1 bis 3, **dadurch gekennzeichnet, dass** die Anordnung (32) flexibler Borsten (33) eine Dichtung (34) mit flexiblen Borsten ist, die am im Wesentlichen ringförmigen Gang (4) angebracht und befestigt ist.

5. Vorrichtung (1) nach Anspruch 4, **dadurch gekennzeichnet, dass** sie Mittel (35) zum Halten der Dichtung (34) mit fest ausgerichteten flexiblen Borsten in einer vorbestimmten Ausrichtung bezüglich des im Wesentlichen ringförmigen Ganges (4).

6. Vorrichtung (1) nach Anspruch 5, **dadurch gekennzeichnet, dass**:
- die Dichtung (34) mit flexiblen Borsten einen teilstarren Grundkörper (36) mit einem nichtkreisförmigen Querschnitt umfasst, von dem sich die flexiblen Borsten (33) erstrecken,
- die Manschette (2) Öffnungen (37) zur Aufnahme der Dichtung (34) mit flexiblen Borsten umfasst, die einen nichtkreisförmigen Querschnitt mit einer Form besitzen, die komplementär zum nichtkreisförmigen Querschnitt des Grundkörpers (36) der Dichtung (34) mit flexiblen Borsten ist.

7. Vorrichtung (1) nach einem der Ansprüche 1 bis 6, **dadurch gekennzeichnet, dass** der im Wesentlichen ringförmige Gang (4) mit Öffnungen (38) ausgestattet ist, die dimensioniert sind, Regenwasser abzulassen, ohne es anderweitig zu ermöglichen, dass zu fangende Schädlinge durchtreten.

8. Vorrichtung (1) nach einem der Ansprüche 1 bis 7, **dadurch gekennzeichnet, dass**:
- die Manschette (2) zumindest teilweise aus einer Vielzahl von Manschettenabschnitten (6a-6f) besteht, die miteinander per Verbindungsmittel (7) verbunden sind,
- wobei die Verbindungsmittel (7) derart ausgebildet sind, dass jeder Manschettenabschnitt (6a-6f) mit einem benachbarten Manschettenabschnitt (6a-6f) in einer um Achsen schwenkbaren Weise verbunden ist, die in einer im Wesentlichen zur ersten Ebene (P1) rechtwinkligen ersten Richtung (I-I) ausgerichtet sind.

9. Vorrichtung (1) nach Anspruch 8, **dadurch gekennzeichnet, dass** die Verbindungsmittel (7) derart ausgebildet sind, dass jeder Manschettenabschnitt (6a-6f) zum benachbarten Manschettenabschnitt (6a-6f) in einer lösbaren Weise verbunden ist.

10. Vorrichtung (1) nach Anspruch 8 oder 9, **dadurch gekennzeichnet, dass** sich jeder Manschettenabschnitt (6a-6f) zwischen zwei Enden (8, 9) erstreckt, und dass:
- jeder Manschettenabschnitt (6a-6f) an einem seiner Enden (8, 9) einen Angelstift (10) besitzt, der in der ersten Richtung (I-I) ausgerichtet ist,
- jeder Manschettenabschnitt (6a-6f) am anderen seiner Enden (8, 9) Mittel (11) zum Aufnehmen des Angelstiftes (10) eines benachbarten Manschettenabschnittes (6a-6f) besitzt.

11. Vorrichtung (1) nach Anspruch 10, **dadurch gekennzeichnet, dass** die Mittel (11) zum Aufnehmen in der ersten Richtung (I-I) beabstandet voneinander aufweisen:
- eine erstes zylindrisches Aufnahmegehäuse (12), das in der ersten Richtung (I-I) ausgerichtet ist, und
- ein zweites zylindrisches Aufnahmegehäuse (13), das in der ersten Richtung (I-I) ausgerichtet und mit einem seitlichen Einführschlitz (14) ausgestattet ist.

12. Vorrichtung (1) nach Anspruch 11, **dadurch gekennzeichnet, dass**:
- der seitliche Einführschlitz (14) eine Breite (ℓ) besitzt, die kleiner ist, als der Durchmesser (d) des Angelstiftes (10) eines benachbarten Manschettenabschnittes (6a-6f),
- das zweite zylindrische Aufnahmegehäuse (13) aus einem Material hergestellt ist, das eine ausreichende Elastizität besitzt, um dem Angelstift (10) eines benachbarten Manschettenabschnittes (6a-6f) zu ermöglichen, durch den seitlichen Einführschlitz (14) kraftschlüssig im zweiten zylindrischen Aufnahmegehäuse (13) aufgenommen zu werden.

13. Vorrichtung (1) nach einem der Ansprüche 8 bis 12, **dadurch gekennzeichnet, dass** die Manschette (2) Manschettenabschnitte (6a-6f) besitzt, die alle miteinander identisch sind.

14. Vorrichtung (1) nach einem der Ansprüche 8 bis 12, **dadurch gekennzeichnet, dass** die Manschette (2) besitzt:
- Manschettenabschnitte (6a-6e), die keine Öffnungsmittel (15) aufweisen und alle miteinander identisch sind,
- wenigstens ein Manschettenabschnitt (6f) mit Öffnungsmitteln (15) ausgestattet ist, die eine Mündung (16) in den Gang (4) umfassen, die es ermöglicht, die tierischen Schädlinge auf direktem Wege zu entfernen.

15. Vorrichtung (1) nach Anspruch 14, **dadurch gekennzeichnet, dass** sie Mittel (17) zum Halten einer Röhre (180) in der Mündung (16) besitzt.

16. Vorrichtung (1) nach Anspruch 14 oder 15, **dadurch gekennzeichnet, dass** sie entfernbare Mittel (24) zum Halten eines Containers (23) zum Aufnehmen und Halten der tierischen Schädlinge umfasst, die durch die Mündung (16) entfernt werden.

17. Vorrichtung (1) nach Anspruch 16, **dadurch gekennzeichnet, dass** die entfernbaren Mittel (24) zum Halten ein Innengewinde (26) zum schraubbaren Rückhalten eines flaschenartigen Containers (23) mit einem Hals (280) umfassen, der mit einem Außengewinde (27) versehen ist.

18. Vorrichtung (1) nach Anspruch 17, **dadurch gekennzeichnet, dass** sie einen oder mehrere Adapter zum Schrauben in das Innengewinde (26) der entfernbaren Mittel (24) zum Halten besitzt, wobei jeder ein Innengewinde mit Abmessungen aufweist, die von denen des Innengewindes (26) der entfernbaren Mittel (24) zum Halten verschieden sind.

19. Vorrichtung (1) nach einem der Ansprüche 8 bis 18, **dadurch gekennzeichnet, dass** jeder Manschettenabschnitt (6a-6f) aufweist:
- einen Gangabschnitt (4'),
- wenigstens einen Streifen (28), der sich von und in Weiterführung des Gangabschnittes (4') erstreckt zum wenigstens teilweise Überdecken des Gangabschnittes (4') eines benachbarten Manschettenabschnittes (6a-6f) .

20. Vorrichtung (1) nach einem der Ansprüche 8 bis 19, **dadurch gekennzeichnet dass** jeder Manschnettenabschnitt (6a-6f) einen Gangabschnitt (4') mit einer konkav gekrümmten inneren Kante (30) besitzt.

21. Verwendung einer Anordnung (32) von flexiblen Borsten (33) zum Bilden einer Verbindung zwischen einem Baumstamm (3) und einer Vorrichtung (1) zum Fangen von tierischen Schädlingen, wie Raupen, wobei die Fangvorrichtung (1) eine Manschette (2) zum Umgeben des Stammes des Baumes (3) besitzt, **dadurch gekennzeichnet, dass** die Borsten (33) in einer sich im wes von der Manschette (2) weggerichteten Weise derart erstrecken, dass sie zum Baum (3) gerichtet sind, um die Rinde (3a) des Baumes (3) mit ihren freien Enden zu berühren und sie einzuschließen.

## Claims

1. A device (1) for trapping animal pests such as caterpillars, having a collar (2) which is designed to surround the trunk of a tree (3), said collar (2) comprising a substantially annular walkway (4) that extends substantially in a first plane (P1) that is intended to be oriented horizontally, and comprising joining means (31) that are intended to join the collar (2) to the trunk of the tree (3),
the joining means (31) comprising an arrangement (32) of flexible bristles (33) having a density suitable for preventing the animal pests from passing through, **characterized in that** the bristles (33) are oriented extending from and away from the walkway (4) so as to be directed towards the tree (3) to wrap and to come into contact with the bark (3a) of the tree (3) by their free terminals.

2. The device (1) as claimed in claim 1, which comprises barrier means (50) on the substantially annular walkway (4), preferably having a peripheral side wall (5) that extends away from the substantially annular walkway (4) in a first direction (I-I) substantially perpendicular to the first plane (P1).

3. The device (1) as claimed in either of claims 1 and 2, wherein the arrangement (32) of flexible bristles (33) is disposed such that the flexible bristles (33) are oriented in a manner extending parallel to the first plane (P1) away from the substantially annular walkway (4) .

4. The device (1) as claimed in any one of claims 1 to 3, wherein the arrangement (32) of flexible bristles (33) is a seal (34) having flexible bristles that is attached and fixed to the substantially annular walkway (4) .

5. The device (1) as claimed in claim 4, which comprises means (35) for maintaining the seal (34) having flexible bristles in a fixed orientation, in a predetermined orientation with respect to the substantially annular walkway (4).

6. The device as claimed in claim 5, wherein:
- the seal (34) having flexible bristles has a semirigid base body (36) having a noncircular cross section, from which the flexible bristles (33) extend,
- the collar (2) has openings (37) for receiving the seal (34) having flexible bristles, having a noncircular cross section with a shape substantially complementary to the noncircular cross section of the base body (36) of the seal (34) having flexible bristles.

7. The device (1) as claimed in any one of claims 1 to 6, wherein the substantially annular walkway (4) is provided with holes (38) that are dimensioned to evacuate rainwater without otherwise allowing the animal pests to be trapped to pass through.

8. The device (1) as claimed in any one of claims 1 to 7, wherein:
- the collar (2) consists at least in part of a plurality of collar sections (6a-6f) that are connected together by connecting means (7),
- said connecting means (7) are designed such that each collar section (6a-6f) is connected to adjacent collar sections (6a-6f) in a manner pivoting about axes that are oriented in a first direction (I-I) substantially perpendicular to the first plane (P1).

9. The device (1) as claimed in claim 8, wherein the connecting means (7) are designed such that each collar section (6a-6f) is connected to the adjacent collar sections (6a-6f) in a removable manner.

10. The device (1) as claimed in either of claims 8 and 9, wherein each collar section (6a-6f) extends between two ends (8, 9), and wherein:
- each collar section (6a-6f) has, at one of its ends (8, 9), a pivot pin (10) that is oriented in the first direction (I-I),
- each collar section (6a-6f) has, at the other of its ends (8, 9), means (11) for receiving the pivot pin (10) of an adjacent collar section (6a-6f).

11. The device (1) as claimed in claim 10, wherein the receiving means (11) have, at a distance from one another in the first direction (I-I):
- a first cylindrical receiving housing (12) that is oriented in the first direction (I-I),
- a second cylindrical receiving housing (13) that is oriented in the first direction (I-I) and provided with a lateral introduction slot (14).

12. The device (1) as claimed in claim 11, wherein:
- the lateral introduction slot (14) has a width (ℓ) less than the diameter (d) of the pivot pin (10) of an adjacent collar section (6a-6f),
- the second cylindrical receiving housing (13) is produced from a material having sufficient elasticity to allow the pivot pin (10) of an adjacent collar section (6a-6f) to be force-fitted into the second cylindrical receiving housing (13), through the lateral introduction slot (14).

13. The device (1) as claimed in any one of claims 8 to 12, wherein the collar (2) comprises collar sections (6a-6f) that are all identical to one another.

14. The device (1) as claimed in any one of claims 8 to 12, wherein the collar (2) has:
- collar sections (6a-6e) that have no opening means (15) and are all identical to one another,
- at least one collar section (6f) that is provided with opening means (15) comprising an orifice (16) in the walkway (4) that allows the animal pests to be evacuated in a directed manner.

15. The device (1) as claimed in claim 14, which has means (17) for holding a tube (180) in the orifice (16) .

16. The device (1) as claimed in either of claims 14 and 15, which comprises removable means (24) for retaining a container (23) that is intended to receive and contain the animal pests that are evacuated through the orifice (16).

17. The device (1) as claimed in claim 16, wherein the removable retaining means (24) comprise an internal thread (26) for retaining, by screwing, a container (23) of the bottle type having a neck (280) that is provided with an external thread (27).

18. The device (1) as claimed in claim 17, which has one or more adapters that are intended to be screwed into the internal thread (26) of the removable retaining means (24) and each have an internal thread having different dimensions than those of the internal thread (26) of the removable retaining means (24).

19. The device (1) as claimed in any one of claims 8 to 18, wherein the collar sections (6a-6f) each have:
- a walkway section (4'),
- at least one tab (28) that extends from and in continuation of the walkway section (4') and is intended to at least partially cover the walkway section (4') of an adjacent collar section (6a-6f).

20. The device (1) as claimed in any one of claims 8 to 19, wherein the collar sections (6a-6f) each have a walkway section (4') having a concavely curved free inner edge (30).

21. The use of an arrangement (32) of flexible bristles (33) to form the join between a tree trunk (3) and a device (1) for trapping animal pests such as caterpillars, said trapping device (1) having a collar (2) that is intended to surround the trunk of a tree (3), **characterized in that**, during said use, the bristles (33) are oriented extending from and away from the collar (2) so as to be directed towards the tree (3) to wrap and to come into contact with the bark (3a) of the tree (3) by their free terminals.
